# EUROPÄISCHE PATENTANMELDUNG

(11) **EP 2 832 641 A1**
(43) Veröffentlichungstag der Anmeldung: **04.02.2015**
(21) Anmeldenummer: 14173658.7
(22) Anmeldetag: 24.06.2014
(51) Int. Cl.: B64C 29/00, B64C 39/02

(54) **Fluggerät zum Befördern von einem oder mehreren Aufnahmegeräten sowie System hierzu**

(30) Priorität: 29.07.2013 DE 102013108076
(71) Anmelder: OIC-GmbH, 42855 Remscheid (DE)
(72) Erfinder: Reichert, Robert Heinrich Kurt, 42857 Remscheid (DE)
(74) Vertreter: Buse, Mentzel, Ludewig Patentanwaltskanzlei

(57) **Zusammenfassung**

Die Erfindung betrifft ein Fluggerät (10) zum Befördern von einem oder mehreren Aufnahmegeräten durch die Luft, in explosionsgefährdeten und/oder kontaminierten Bereichen. Hierbei ist ein Korpus (20) mit wenigstens vier nach innen (24) gebogenen Armen (21) vorgesehen, an deren Enden (22) je wenigstens eine über einen Motor (42) angetriebener Rotor (11) angeordnet ist, wobei die Rotoren (11) die Flugbewegung des Fluggerätes (10) steuern. Außerdem ist eine Brücke (30) vorgesehen, an deren erstem Ende (31) eine Halterung (12) für das Aufnahmegerät angeordnet ist, wobei an deren zweitem Ende (32) ein Gegengewicht (34) befindlich ist. Die Brücke (30) ist mit ihrer Schwerpunktachse (33) über ein Zentralmodul (40) kardanisch an der Schwerpunktachse (23) des Korpus (20) gelagert.

## Beschreibung

Die Erfindung betrifft ein Fluggerät gemäß dem Oberbegriff des Anspruchs 1 sowie ein System umfassend ein Fluggerät und ein Aufnahmegerät gemäß Anspruch 10.

Bekannte Fluggeräte können zur Aufnahme von Bildern und Ähnlichem verwendet werden. Sollen sie jedoch in einem Bereich eingesetzt werden, in dem ein erhöhtes Risiko von Explosionen besteht - ein so genannter Ex-Bereich - oder der anderweitig verunreinigt oder kontaminiert ist, ergeben sich erhebliche Probleme. Einerseits ist es zwar gewünscht, solche Bereiche von einem ferngesteuerten Fluggerät durchqueren zu lassen, damit nicht Personen in die Bereiche selbst hineingehen müssen oder um Aufnahmen zu machen oder Messungen durchzuführen. Andererseits muss jedoch dem Explosionsschutz Rechnung getragen werden, so dass keine potentiellen Zündquellen in den Bereich eingebracht werden und das Fluggerät sowie eventuelle Aufnahme- oder Aufzeichnungsgeräte und Sensoren müssen danach ggf. dekontaminiert werden.

Aufgabe der Erfindung ist es daher, ein Fluggerät zu konstruieren, welches auch in Bereichen einsetzbar ist, die explosionsgefährdet oder kontaminiert sind. Weitere Aufgabe der Erfindung ist es, ein System bereitzustellen, mittels welchem Aufnahmen, Aufzeichnungen, Messungen oder Ähnliches in derartigen explosionsgefährdeten Bereichen oder kontaminierten Gegenden getätigt werden können. Diese Aufgaben werden durch die kennzeichnenden Merkmale der Ansprüche 1 und 10 gelöst, denen folgende besondere Bedeutung zukommt.

Alle Motoren und andere Antriebe des Fluggerätes werden durch induzierte Magnetfelder mit Energie versorgt, welche durch Akkumulatoren erzeugt werden. Die Motoren sind dabei vorzugsweise als bürstenlose Elektromotoren ausgebildet, die für eine zusätzliche Kapselung noch vergossen werden, beispielsweise durch ein Epoxidharz. Sämtliche Lager der beweglichen Teile des Fluggerätes sind als gekapseltes Lager ohne Schmiermittel ausgeführt. Diese sind auch in explosionsgefährdeten Bereichen einsetzbar. Durch die Kapselung der Lager und die Ausführung der Antriebe der Motoren als induzierte Magnetfelder können keine Funken entstehen, welche in einem Ex-Bereich nicht zugelassen sind, da sie eine Zündquelle darstellen, die eine Detonation auslösen könnte. Auch die gekapselten Lager sind in diesen Ex-Bereichen einsetzbar, da durch die Kapselung eventuell bei der Drehbewegung des Lagers auftretende Funken nicht nach außen gelangen können. Das so erhaltene Fluggerät ist somit auch in Ex-Bereichen einsetzbar, wie beispielsweise in chemischen Anlagen, Reaktoren, Tanks, Produktionsstätten, Laboren und Lagern, aber auch im Bereich des Bergbaus usw. Hierbei ist es unerheblich, ob es sich um explosionsförmige Gemische mit gasförmigen explosionsfähigen Stoffen oder mit Stäuben oder Aerosolen handelt. Das erfindungsgemäße Fluggerät ist in allen diesen Bereichen einsetzbar.

In einem bevorzugten Ausführungsbeispiel verfügt das Zentralmodul über Ausgleichselemente in Form von Federn. Diese sorgen dafür, dass die Brücke immer in Ihrer Nullposition gehalten wird, auch wenn äußere Kräfte, wie beispielswiese Luftströmungen, Winde oder Ähnliches auf das Fluggerät einwirken. Unter Nullposition ist hierbei diejenige Position zu verstehen, die die Brücke bzw. das Aufnahmegerät einnehmen, wenn keine äußeren Einflüsse auf diese oder das Fluggerät einwirken. Diese Federn sind ebenfalls in den bereits genannten schwierigen Umgebungsbedingungen, wie beispielsweise in Ex-Bereichen oder kontaminierten Bereichen, einsetzbar. Es ist selbstverständlich auch möglich, andere Formen von Ausgleichselementen vorzusehen, beispielsweise Servomotoren, die dann wieder durch induzierte Magnetfelder angetrieben werden, wobei die Lager als gekapselte Lager ausgeführt sind. Die Federn sind jedoch kostengünstiger und somit zu bevorzugen.

Um zu verhindern, dass das Fluggerät durch aggressive, in der Flugumgebung befindliche Stoffe, angegriffen wird bzw. dass derartige Stoffe am Fluggerät haften bleiben, sind die Oberflächen, insbesondere im Bereich der Brücke, des Korpus, des Zentralmoduls und/oder der Rotoren, in einem Ausführungsbeispiel mit einer Beschichtung versehen. Diese besteht vorzugsweise aus einem Epoxidharz. Eine derartige Beschichtung verhindert, dass Stoffe an der Oberfläche des Fluggerätes haften bleiben. Sollte es doch zu einer Kontamination des Fluggerätes kommen, kann dieses vollständig in ein Reinigungsbad, beispielsweise aus Wasser, einer Tensidlösung, Alkohol oder auch einem anderen Lösemittel eingetaucht und so dekontaminiert werden. Ein derartiges Fluggerät ist somit wiederverwendbar und kann in unterschiedlichsten Bereichen eingesetzt werden. Alternativ ist es auch möglich, auf die Beschichtung des Fluggerätes zu verzichten und dies aus einem kostengünstigen Material vorzusehen. In diesem Fall kann das Fluggerät nach der Verwendung entsorgt werden. Welche Variante gewählt wird, ist vom jeweiligen Anwendungsfall abhängig.

In einem weiteren bevorzugten Ausführungsbeispiel sind auch die Spulen und Magnete, die für die Induktion der Magnetfelder verwendet werden, gekapselt. So ist das Fluggerät noch sicherer ausgestaltet und das Risiko von Funkenflug wird weiter minimiert. In diesem Fall ist das Eintauchen eines Fluggerätes in ein Reinigungsbad besonders unproblematisch, da die Spulen und Magnete nicht durch das Reinigungsbad verunreinigt werden können.

In einem bevorzugten Ausführungsbeispiel ist das Material, aus dem das Fluggerät besteht, antistatisch. Hierbei ist es besonders vorteilhaft, die Brücke, den Korpus, das Zentralmodul und/oder die Rotoren aus einem antistatischen Material herzustellen. Vorteilhaft daran ist, dass das Fluggerät sich nicht statisch aufladen kann, was beispielsweise zu einer statischen Entladung führen könnte, welche in einem Ex-Bereich eine Explosion auslösen könnte. Außerdem können sich auf statisch aufgeladenen Bereichen Festkörper, wie Stäube oder Ähnliches, leichter anreichern. Auch dies wird durch ein antistatisches Material vermieden.

In einem weiteren bevorzugten Ausführungsbeispiel ist das Zentralmodul so stabil ausgestaltet, dass es sämtliche Belastungen in Zug- und Druckrichtung sowie Torsionskräfte, die auf den Korpus oder auf die Brücke wirken, aufnehmen kann. In diesem Fall können der Korpus und die Brücke sehr leicht ausgebildet sein, was vorteilhaft ist, da dann weniger Energie für den Betrieb des Fluggerätes benötigt wird und das Fluggerät kleiner und wendiger ausgestaltet werden kann.

Vorteilhafterweise ist das Fluggerät so konstruiert, dass keine Hohlräume vorhanden sind, in denen sich Gase oder kontaminierte bzw. explosive Gemische ansammeln können. Dies gilt es zu vermeiden, da das Fluggerät, sobald es aus einem Ex-Bereich oder einem kontaminierten Bereich herausgebracht wird, sonst kontaminierte Luft oder auch explosive Gasgemische mit sich bringen könnte. Um dies zu verhindern, sind keine Hohlräume am Fluggerät vorgesehen.

Besonders einfach wird ein Entstehen von Hohlräumen dadurch verhindert, dass der Korpus und/oder die Brücke aus einer Gitterkonstruktion bestehen. Hier gibt es schon per se keine Hohlräume, in denen sich Gase anreichern könnten. Vielmehr bewegt sich die Gitterkonstruktion durch die Luft, ohne Teile der Luft mitzunehmen. Besonders vorteilhaft ist es dann, den Korpus und/oder die Brücke ganz oder teilweise aus einem Kunststoff herzustellen. Dieser ist einfach in der Herstellung und weist eine geringe Dichte auf, so dass das Gewicht des Fluggerätes weiter reduziert werden kann.

In einem besonders bevorzugten Ausführungsbeispiel sind der Korpus und/oder die Brücke und/oder das Zentralmodul zumindest bereichsweise gedruckt und weisen vorzugsweise ganz oder teilweise eine organische Form auf. Unter einer organischen Form ist jegliche Form zu verstehen, die in der Natur vorkommt, beispielsweise Bäume, Äste, Zweige, Knochen, Spinnennetze, Geweihe, Gelenke oder Ähnliches. Derartige organische Formen haben den Vorteil, dass sie häufig stabiler sind als klassische, technische Formen. So ist es möglich, das Fluggerät noch leichter aufzubauen, da weniger Material für die gleiche oder sogar eine höhere Stabilität benötigt wird.

Des Weiteren umfasst die Erfindung noch ein System zur Messung und/oder zur Aufnahme von Daten, wie z.B. Bildern, Messwerten, Umgebungsparametern, Geräuschen, Filmen oder Ähnlichem. Hierbei ist ein erfindungsgemäßes Fluggerät vorgesehen sowie wenigstens ein Aufnahmegerät, durch welches die Daten gemessen oder aufgenommen werden können. Erfindungsgemäß ist auch das Aufnahmegerät wasserfest gekapselt. Ein derartig gekapseltes Aufnahmegerät genügt auch den Anforderungen für den Einsatz eines solchen Gerätes in einem explosionsgefährdeten oder auch kontaminierten Bereich. Durch die Wasserfestigkeit kann das Aufnahmegerät nach dem Einsatz auch beispielsweise in einem Reinigungsbad gereinigt werden so wie auch das Fluggerät selbst. Außerdem kann durch die wasserfeste Kapselung verhindert werden, dass das Aufnahmegerät durch in der Umgebung befindliche Chemikalien, Stäube, Aerosole oder Dämpfe verunreinigt oder beschädigt wird. Die Kapselung des Aufnahmegerätes kann selbstverständlich auch bevorzugterweise wieder aus einem antistatischen Material bestehen und/oder oder mit einem Epoxidharz beschichtet sein.

Weiterhin vorteilhaft ist es, wenn das im System verwendete Aufnahmegerät über eine drahtlose Verbindung, wie eine Funkverbindung, WLAN, Bluetooth oder Ähnliches einschaltbar und/oder steuerbar ist, bzw. wenn das Aufnahmegerät die Daten über eine solche Verbindung an ein Empfangsgerät oder einen Computer sendet. So ist es möglich, das Aufnahmegerät auch erst dann einzuschalten, wenn es sich in dem betreffenden explosionsgefährdeten oder kontaminierten Bereich befindet, ohne dass eine Bedienperson sich selbst in diesem Bereich aufhält oder durch die Betätigung entsprechende unerwünschte Funken produziert. Außerdem kann auch eine entsprechende drahtlose Verbindung vorgesehen sein, um das Fluggerät selbst zu steuern und in eine gewünschte Richtung zu lenken. Wenn die Aufnahmen bzw. Aufzeichnungen oder Messungen des Aufnahmegerätes direkt über eine drahtlose Verbindung an einen Computer, ein Empfangsgerät oder eine ähnliche Einrichtung übermittelt werden, kann die Bedienperson auch direkt entscheiden, ob das Fluggerät noch in andere Bereiche fliegen muss, um noch weitere Aufnahmen oder Messungen vorzunehmen. Somit ist es schnell und einfach möglich, kontaminierte bzw. explosionsgefährdete Bereiche möglichst vollständig in relativ kurzer Zeit mit dem erfindungsgemäßen System zu untersuchen.

Weitere Vorteile und Ausführungsbeispiele ergeben sich aus der nachfolgenden Beschreibung, den Unteransprüchen und den Zeichnungen. In den Figuren ist ein Ausführungsbeispiel des erfindungsgemäßen Fluggerätes dargestellt. Es zeigen:
- Fig. 1:: ein erfindungsgemäßes Fluggerät in Draufsicht,
- Fig. 2:: das erfindungsgemäße Fluggerät aus Fig. 1 Seitenansicht,
- Fig. 3:: das erfindungsgemäße Fluggerät aus Fig. 1 und 2 in Vorderansicht.

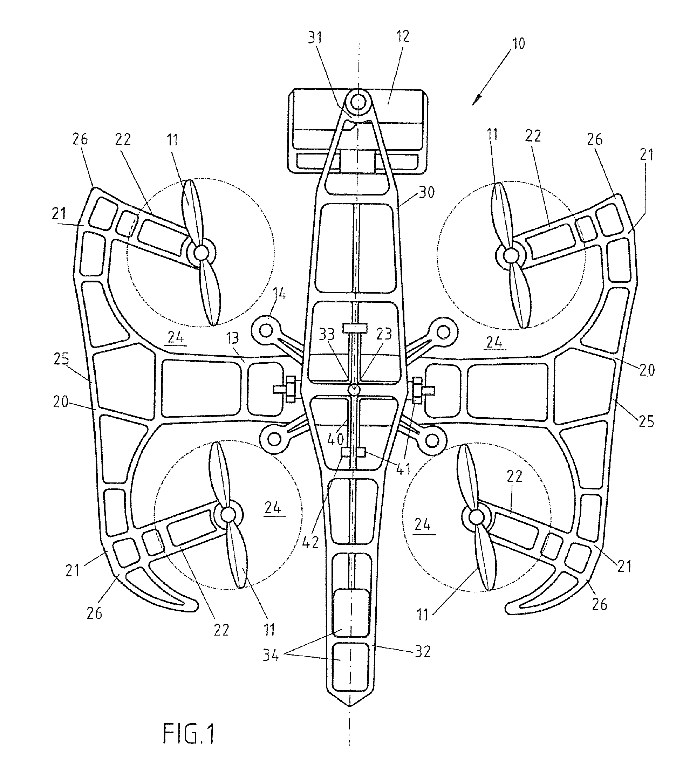

Fig. 1 zeigt ein erfindungsgemäßes Fluggerät 10 zum Befördern eines oder mehrerer Aufnahmegeräte durch die Luft in Draufsicht. Man erkennt die Halterung 12, in welcher ein oder mehrere Aufnahmegeräte anbringbar sind. Selbstverständlich ist es auch möglich, weitere Aufnahmegeräte an anderen Positionen beispielsweise an der Brücke 30 oder auch am Korpus 20 vorzusehen. Dies ist insbesondere bei Sensoren und anderen Messgeräten sinnvoll.

Der Korpus 20 weist vier nach innen 24 gekrümmte Arme 21 auf, an deren Enden 22 jeweils ein Rotor 11 angeordnet ist. Des Weiteren ist noch die Brücke 30 vorgesehen, an deren erstem Ende 31 die schon beschriebene Halterung 12 angeordnet ist, während am zweiten Ende 32 das Gegengewicht 34 vorgesehen ist. Dieses Gegengewicht 34 kann vorteilhafterweise aus Akkumulatoren bestehen, welche zum Betrieb der Motoren für die Rotoren 11 oder auch der drahtlosen Datenverbindung des Fluggerätes 10 oder des Systems an ein Empfangsgerät, einen Computer oder Ähnliches dienen können.

Weiterhin erkennt man, dass die Brücke 30 mit ihrer Schwerpunktachse 33 an der Schwerpunktachse 23 des Korpus 20 über ein Zentralmodul 40 angeordnet ist. Hierbei fluchten die beiden Schwerpunktachsen 23, 33. Das Zentralmodul 40 ist besonders stabil ausgeführt, um Kräfte in Zug- und Druckrichtung oder auch Torsionsmomente, die auf die Brücke 30 und/oder der Korpus 20 wirken, aufzunehmen. Des Weiteren sind auch Ausgleichselemente 41 in Form von Federn 42 am Zentralmodul 40 vorgesehen. Die Federn 42 sind hier nur stilistisch dargestellt. Diese Ausgleichselemente 41 dienen dazu, die Brücke 30 im Betrieb immer in ihrer Nullposition zu halten, um beispielsweise scharfe, stabile und unverwackelte Aufnahmen, wie Filmaufnahmen, Bilder, Infrarotaufnahmen oder Ähnliches über das Aufzeichnungsgerät zu ermöglichen. Außerdem ist es so besser möglich das Aufzeichnungsgerät genauer zu positionieren und so besser Messwerte zu erhalten.

Des Weiteren erkennt man, dass noch Standfüße 14 vorgesehen sind, auf welchen das Fluggerät 10 landen kann oder von denen es starten kann. Diese sind hier am Korpus 20 vorgesehen.

Aus den Fig. 1 bis 3 geht hervor, dass sowohl der Korpus 20 als auch die Brücke 30 und das Zentralmodul 40 nach Art einer Gitterkonstruktion 13 ausgestaltet sind. Hierdurch können sich giftige oder explosive Gase, Gasgemische, Aerosole und Stäube in Hohlräumen des Fluggerätes ansammeln, da derartige Hohlräume hier nicht vorhanden sind. Darüber hinaus ist die so gebildete Gitterkonstruktion 13 besonders leicht. Es ist somit möglich, das Fluggerät 10 mit einem sehr geringen Eigengewicht auszustatten und dabei auch klein und kompakt zu halten, wodurch es wenig Energie verbraucht und wendig ist.

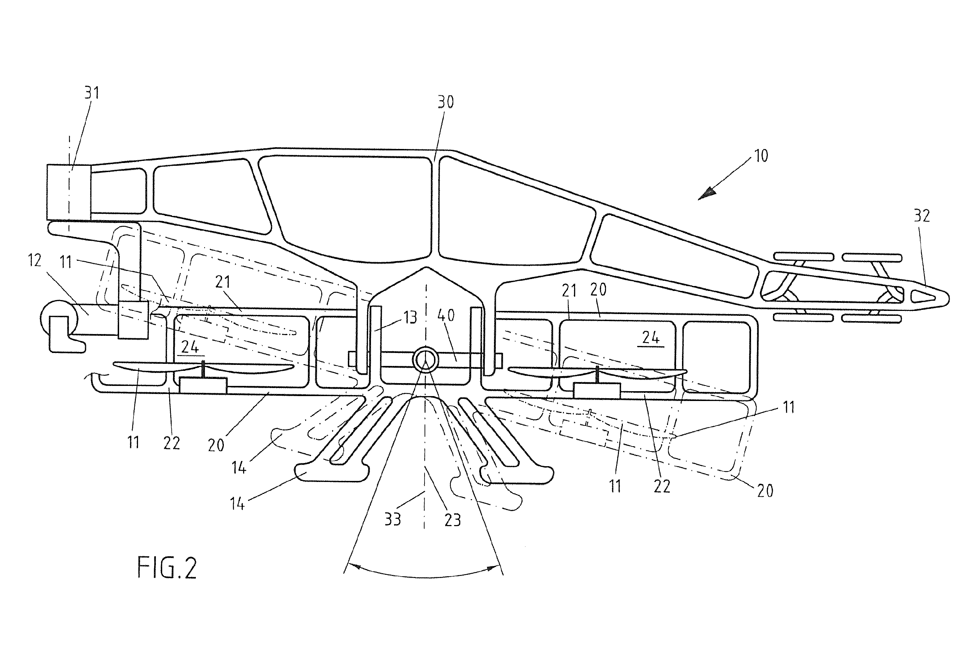

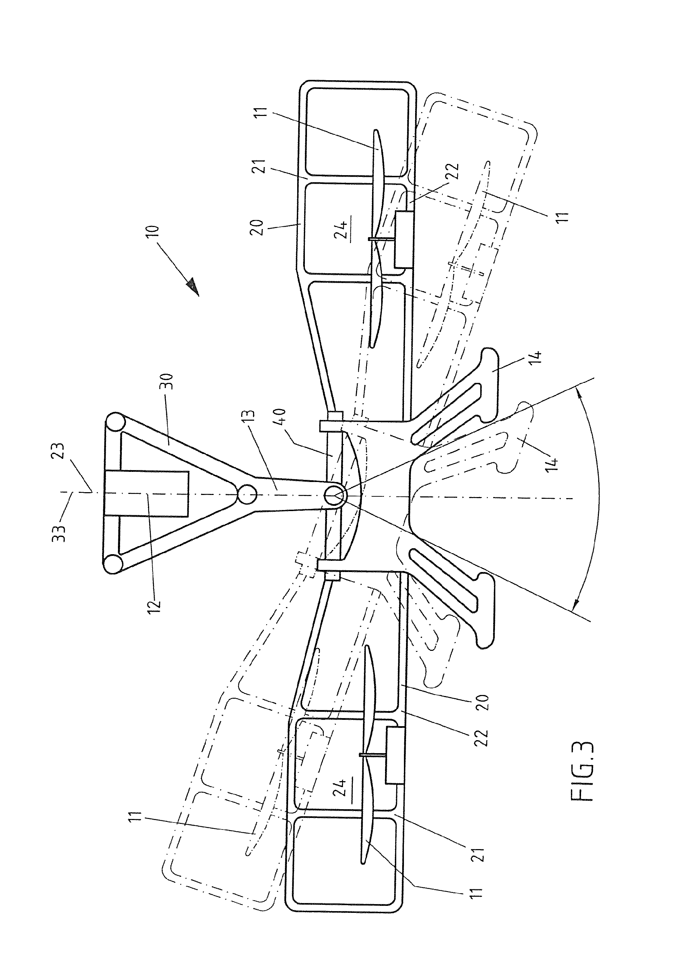

In den Fig. 2 und 3 ist nochmals dargestellt, dass die Brücke 30 immer in ihrer Nullposition verbleibt, auch wenn der Korpus 20 ausgelenkt wird. Dies wird durch die kardanische Aufhängung der Brücke 30 über das Zentralmodul 40 realisiert sowie auch über die Ausgleichselemente 41. Die Auslenkung des Korpus 20 ist durch gestrichelte Linien dargestellt.

Um das Fluggerät 10 auch in explosionsgefährdeten Bereichen einsetzen zu können, sind sämtliche Motoren und Lager gekapselt ausgestaltet. Die Energieversorgung der Motoren erfolgt über induzierte Magnetfelder. Auch die Spulen und Magnete, die für diese Induktionen notwendig sind, sind im vorliegenden Ausführungsführungsbeispiel gekapselt.

Werden jetzt ein oder mehrere Aufzeichnungsgeräte am Fluggerät 10 angeordnet, so entsteht ein erfindungsgemäßes System. Diese Aufnahmegeräte sollten dann ebenfalls gekapselt sein, am besten wasserfest.

Es besteht nun auch die Möglichkeit, das Fluggerät 10 mit einer Oberflächenversiegelung beispielsweise aus einem Epoxidharz zu versehen. Dann kann das Fluggerät 10 einfach gereinigt werden, beispielsweise in einem Reinigungsbad mit Wasser, Alkohol, einer Tensidlösung, wie auch in anderen Lösemitteln und Flüssigkeiten. Alternativ kann auf eine derartige Beschichtung verzichtet werden. Dann kann das Fluggerät 10 preisgünstiger hergestellt werden, muss aber ggf. nach einem Einsatz in einem entsprechend kontaminierten Gebiet der Entsorgung zugeführt werden. Welche der Möglichkeiten gewählt wird, ist vom jeweiligen Anwendungsfall abhängig.

Des Weiteren vorteilhaft ist es, das Material des Fluggerätes 10 antistatisch auszuführen, um eine statische Entladungen oder auch die Anlagerung von Stäuben und Schmutz am Fluggerät 10 zu verhindern. Dies gilt selbstverständlich auch für die Umhüllung des Aufzeichnungsgerätes, welches für eine wasserfeste Kapselung sorgt.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste:

- 10: Fluggerät
- 11: Rotor
- 12: Halterung
- 13: Gitterkonstruktion
- 14: Standfuß
- 20: Korpus
- 21: Arm
- 22: Ende von 21
- 23: Schwerpunktachse von 20
- 24: Inneres von 20
- 25: Längsseite von 20
- 26: Ecke von 20
- 30: Brücke
- 31: Erstes Ende von 30
- 32: Zweites Ende von 30
- 33: Schwerpunktachse von 30
- 34: Gegengewicht
- 40: Zentralmodul
- 41: Ausgleichselement
- 42: Feder

## Patentansprüche

1. Fluggerät (10) zum Befördern von einem oder mehreren Aufnahmegeräten wie Aufzeichnungsgeräten, Sensoren, Kameras, Infrarotkameras, Mikrofonen o.ä. durch die Luft, insbesondere in kontaminierten oder explosionsgefährdeten Bereichen,
mit einem Korpus (20) mit wenigstens vier nach innen (24) gebogenen Armen (21), an deren Enden (22) je wenigstens ein über einen Motor (42) angetriebener Rotor (11) angeordnet ist, wobei die Rotoren (11) die Flugbewegung steuern,
mit einer Brücke (30) an deren erstem Ende (31) eine Halterung (12) für das Aufnahmegerät angeordnet ist, wobei an deren zweitem Ende (32) ein Gegengewicht (34) vorgesehen ist
wobei die Brücke (30) mit ihrer Schwerpunktachse (33) über ein Zentralmodul (40) kardanisch an der Schwerpunktachse (23) des Korpus (20) gelagert ist,
**dadurch gekennzeichnet,**
**dass** alle Motoren als bürstenlose Elektromotoren ausgebildet und durch induzierte Magnetfelder, die durch Akkumulatoren erzeugt werden, antreibbar sind
und **dass** sämtliche Lager als gekapselte Lager ohne Schmiermittel ausgeführt sind.

2. Fluggerät (10) nach Anspruch 1, **dadurch gekennzeichnet, dass** die Spulen und Magnete, die für die Induktion der Magnetfelder Verwendung finden, gekapselt sind.

3. Fluggerät (10) nach einem der Ansprüche 1 oder 2, **dadurch gekennzeichnet, dass** die Oberflächen des Fluggerätes (10), insbesondere im Bereich der Brücke (30), des Korpus (20), des Zentralmoduls (40) und/oder der Rotoren (11) mit einer Beschichtung, vorzugsweise aus einem Epoxidharz versehen sind.

4. Fluggerät (10) nach einem der Ansprüche 1 bis 3, **dadurch gekennzeichnet, dass** das Zentralmodul (40) über Ausgleichselemente (41) in Form von Federn (42) verfügt, die dafür sorgen, dass die Brücke (30) immer in ihrer Nullposition gehalten wird, um eine gleichmäßige Aufnahme des Aufnahmegeräts zu ermöglichen.

5. Fluggerät (10) nach einem der Ansprüche 1 bis 4, **dadurch gekennzeichnet, dass** das Material, aus dem das Fluggerät (10) und insbesondere die Brücke (30), der Korpus (20), das Zentralmodul (40) und/oder die Rotoren (11), bestehen, antistatisch ist.

6. Fluggerät (10) nach einem der Ansprüche 1 bis 5, **dadurch gekennzeichnet, dass** das Zentralmodul (40) so stabil ausgestaltet ist, dass es sämtliche Belastungen in Zug- und Druckrichtung sowie Torsionskräfte, die auf den Korpus (20) bzw. die Brücke (30) wirken, zerstörungsfrei aufnehmen kann.

7. Fluggerät (10) nach einem der Ansprüche 1 bis 6, **dadurch gekennzeichnet, dass** das Fluggerät (10) so ausgestaltet ist, dass keine Hohlräume vorhanden sind, in denen sich Gase ansammeln könnten.

8. Fluggerät (10) nach einem der Ansprüche 1 bis 7, **dadurch gekennzeichnet, dass** der Korpus (20) und/oder die Brücke (30) und/oder das Zentralmodul (40) aus einer Gitterkonstruktion (13), vorzugsweise ganz oder teilweise aus Kunststoff, bestehen.

9. Fluggerät (10) nach einem der Ansprüche 1 bis 8, **dadurch gekennzeichnet, dass** der Korpus (20) und/oder die Brücke (30) und/oder das Zentralmodul (40) zumindest bereichsweise gedruckt sind und vorzugsweise ganz oder teilweise eine organische Form aufweisen.

10. System zur Messung und/oder Aufnahme von Daten, wie z.B. von Messwerten, Bildern, Geräuschen, Filmen oder Umgebungsparametern, mit einem Fluggerät (10) nach einem der Ansprüche 1 bis 9, **dadurch gekennzeichnet, dass** wenigstens ein Aufnahmegerät am Fluggerät (10) vorgesehen ist, welches wasserfest gekapselt ist.

11. System nach Anspruch 10, **dadurch gekennzeichnet, dass** das Aufnahmegerät über eine drahtlose Verbindung wie eine Funkverbindung, WLAN, Bluetooth oder eine sonstige Verbindung einschaltbar und/oder steuerbar ist und/oder dass aufgezeichnete oder gemessene Daten über eine solche Verbindung an ein Empfangsgerät oder einen Computer gesendet werden.

12. System nach einem der Ansprüche 10 oder 11, **dadurch gekennzeichnet, dass** das Fluggerät (10) über eine drahtlose Verbindung wie eine Funkverbindung, WLAN, Bluetooth oder eine sonstige Verbindung einschaltbar und/oder steuerbar ist.
